# EUROPEAN PATENT APPLICATION

(11) **EP 4 184 244 A1**
(43) Date of publication of application: **24.05.2023**
(21) Application number: 20946324.9
(22) Date of filing: 28.07.2020
(51) Int. Cl.: G03B 21/58

(54) **ADJUSTABLE FOLDING ANTI-LIGHT CURTAIN MOUNTING MECHANISM**

(30) Priority: 21.07.2020 CN 202010703259
(71) Applicant: Qingyuan Saca Precision Manufacturing Co., Ltd., Qingyuan City, Guangdong 511500 (CN)
(72) Inventor: CAI, Geng Xi, Foshan, Guangdong 528311 (CN); LI, Yan Rong, Foshan, Guangdong 528311 (CN); LUN, Kaicheng, Foshan, Guangdong 528311 (CN); HUANG, Jingyang, Foshan, Guangdong 528311 (CN); LIU, Chenggui, Foshan, Guangdong 528311 (CN)
(74) Representative: JD&P Patent Attorneys Joanna Dargiewicz & Partners
(86) International application number: PCT/CN2020/105141
(87) International publication number: WO 2022/016572

(57) **Abstract**

An adjustable folding anti-light curtain mounting mechanism, comprising a frame assembly, and an anti-light curtain (1) mounted to the frame assembly in an adaptive manner. The frame assembly comprises an inner frame combination frame, an outer frame combination frame (2), and connecting rods (3), which are sequentially assembled to form an inner frame mounting frame. Under structural cooperation of an adjustment screw (8) and an adjustment nut (9) of an adjustment assembly as well as an adjustment connecting frame (6) and adjustment springs (7), the structure is simple, the curtain (1) is mounted quickly, the operation is facilitated, and the mounting position of the curtain (1) and the tensioning degree of the curtain (1) can be adjusted, thereby reducing the use limitation, and improving the use effect of the curtain (1). Moreover, under structural cooperation of a corner folding combination frame, an elastic buckle (11), and locking holes (10), when an inner frame longitudinal frame (5) is folded or opened at an inner frame folding transverse frame (4), the elastic buckle (11) can be driven to be buckled in the locking holes (10) or separated from the locking holes (10) during use, thereby achieving folding convenience, storage easiness, and use convenience.

## Description

### TECHNICAL FIELD

The present disclosure relates to the technical field of anti-light curtain mounting mechanism, and in particular to an adjustable folding anti-light curtain mounting mechanism.

### BACKGROUND

An anti-light curtain is a commonly used product in projector peripheral equipment, and it is common to assemble the anti-light curtain in a curtain mounting frame to spread it vertically in front of people. The structure of a conventional curtain mounting frame includes an outer frame, an inner frame, and a connecting rod. The curtain is buckle-mounted on the inner frame by a spring, and the outer frame is placed covering the spring and is assembled on the inner frame. In this way, the curtain is unfolded flatly by the elasticity of the spring.

However, the conventional mounting structure of anti-light curtains has the following deficiencies.
1) the frames are commonly assembled using screws, with many parts, long on-site mounting time, and tedious operation.
2) a long time is required for mounting in user's home, and the anti-light curtain may not be tight enough and/or flat, etc.
3) it is complicated for disassembling and storing due to the many parts, not easy to store.
4) the conventional curtain mounting frame is welded with lugs, and the positions of the lugs are fixed; a high degree of precision is demanded when the lugs are hooked on the wall or other positions, otherwise unable to hang the curtain mounted on the wall or other positions; the operation is cumbersome, difficult to adapt to changes in the mounting positions, with poor applicability and great application limitations.

### SUMMARY OF THE DISCLOSURE

### Technical problem

The purpose of the present disclosure is to overcome the shortcomings of the prior art and provide an adjustable folding anti-light curtain mounting mechanism, which has a simple structure, quick installation of the curtain, easy to operate, and can adjust the curtain mounting position and curtain tension, thereby reducing application limitations, enhancing the use of the curtain, while convenient folding, easy to store and to use.

### Solution to solve the problem

### Technical solution

The purpose of the present disclosure is to achieve the following: an adjustable folding anti-light curtain mounting mechanism, comprising a frame assembly and an anti-light curtain adapted to be arranged on the frame assembly; wherein the frame assembly comprises an inner-frame combination holder, an outer-frame combination holder configured to be arranged on an outer edge of the inner-frame combination holder, and a connecting rod configured to be connected to an inner side of the inner-frame combination holder; characterized in that the inner-frame combination holder comprises an inner-frame folding cross-frame and an inner-frame longitudinal frame, that are configured to be assembled in sequence to form an inner-frame mounting frame; each of the inner-frame folding cross-frame and the inner-frame longitudinal frame is arranged with an adjusting combination, an adjusting connecting frame, and an adjusting spring, for adjusting a tension of the anti-light curtain; the adjusting connecting frame of the inner-frame folding cross-frame is disposed on the inner-frame folding cross-frame, and the adjusting connecting frame of the inner-frame longitudinal frame is disposed on the inner-frame longitudinal frame; the adjusting combination comprises an adjusting screw and an adjusting nut; the adjusting screw of the inner-frame folding cross-frame is rotatably connected to the inner-frame folding cross-frame, and the adjusting screw of the inner-frame longitudinal frame is rotatably connected to the inner-frame longitudinal frame; the adjusting nut is fixed on the adjusting connecting frame and threadedly connected to the adjusting screw; an end of the adjusting spring is fastened to the adjusting connecting frame, and the other end of the adjusting spring is fastened to a side of the anti-light curtain;
a splicing corner position of the inner-frame folding cross-frame and the inner-frame longitudinal frame is arranged with a corner folding combination frame; a positioning part of the corner folding combination frame is fixed to the inner-frame folding cross-frame, and a movable part of the corner folding combination frame is fixed to the inner-frame longitudinal frame; the positioning part of the corner folding combination frame defines a locking hole, and the movable part of the corner folding combination frame is arranged with an elastic buckle; a positioning end of the elastic buckle is fixed to the corner folding combination frame, and folding and unfolding of the inner-frame longitudinal frame relative to the inner-frame folding cross-frame drive the elastic buckle o be fastened in the locking hole or separated from the locking hole.

In some embodiments, each of the inner-frame folding cross-frame and inner-frame longitudinal frame defines an adjustment slot, and the adjustment connecting frame is arranged in the adjustment slot and slidable inside and outside in the adjustment slot.

In some embodiments, each of the inner-frame folding cross-frame and the inner-frame longitudinal frame is arranged with a limit post configured to limit an internal-and-external sliding position of the adjusting connecting frame, and the adjusting connecting frame defines a limit slot slidably connected to the limit post.

In some embodiments, the adjusting connecting frame defines a positioning slot, and the adjusting nut is slidably arranged in the positioning slot; the end of the adjusting spring is arranged with a catch slidably arranged in the positioning slot, and the other end of the adjusting spring is arranged with a snap hook configured to be fastened to the side of the anti-light curtain.

In some embodiments, the corner folding combination frame comprises a corner positioning frame, a corner movable frame and the elastic buckle; the corner positioning frame is fixed to the inner-frame folding cross-frame, and the corner movable frame is fixed to inner-frame longitudinal frame; the corner positioning frame is arranged with a connecting shaft for rotating connection with the corner movable frame; an end of the elastic buckle is fixedly arranged on the corner movable frame, and the other end of the elastic buckle is arranged with an elastic pin adapted to be fitted or separated with the locking hole.

In some embodiments, the splicing corner position of the inner-frame folding cross-frame and the inner-frame longitudinal frame is fixed with a strengthening corner frame.

In some embodiments, a front side and a rear side of a folding position of the inner-frame folding cross-frame re respectively arranged with a hidden hinge and a strengthening connecting plate.

In some embodiments, the connecting rod s arranged with at least one elastic hook slidably arranged on the connecting rod; each elastic hook is assembled with a hanging lug configured to be fixed to a wall.

In some embodiments, each elastic hook comprises a mounting plate, a torsion spring, a hook, and a locking screw; the mounting plate is slidably connected to the connecting rod, the locking screw is connected to left and right sides of the mounting plate and fixes ends of the hook to the left and right sides respectively, and the middle of the hook is swingable up and down with the ends as fixed points; the torsion spring is arranged between the locking screw and the hook, an end of the torsion spring is fastened to the mounting plate, and the other end of the torsion spring is arranged in the middle of the hook.

### Technical effect of the present disclosure

### Technical effect

The advantages of the present disclosure are as followed.
1) with the structure of adjusting screw, adjusting nut, adjusting connecting frame, and adjusting spring, when rotating the adjusting screw, the adjusting connecting frame can be slid from inside to outside or from outside to inside to adjust the tension of the anti-light curtain, such that the anti-light curtain can be spread vertically and flatly to enhance the usage effect of the anti-light curtain.
2) using the inner-frame folding cross-frame and the inner-frame longitudinal frame sequentially assembled to form the inner frame mounting frame, and the adjusting spring in the snap method, such that the curtain can be quickly mounted, greatly reducing the mounting time of the anti-light curtain, easy to operate.
3) under the role of corner folding frame, it is easy to fold the inner-frame longitudinal frame on the inner-frame folding cross-frame, and to make the inner-frame longitudinal frame opened and locked on the inner-frame folding cross-frame, with self-locking function strengthening the use of stability, but also with the folding function for ease of storing.
4) the use of elastic hooks slidably connected to the connecting rod can ensure a solid structure, which can adapt to changes in the mounting positions, reducing the use of limitations and ensuring the normal use of the curtain.

### BRIEF DESCRIPTION OF THE DRAWINGS

### Drawing description

FIG. 1 is a structural schematic view according to an embodiment of the present disclosure.
FIG. 2 is a structural front view (with an outer-frame combination holder unillustrated) according to an embodiment of the present disclosure.
FIG. 3 is a cross-sectional schematic view of a partial structure in FIG. 2 according to an embodiment of the present disclosure.
FIG. 4 is an exploded schematic view of FIG. 3 according to an embodiment of the present disclosure.
FIG. 5 is an enlarged schematic view of a partial structure in FIG. 2 according to an embodiment of the present disclosure.
FIG. 6 is an exploded schematic view of a partial structure in FIG. 2 according to an embodiment of the present disclosure.
FIG. 7 is a structural schematic view of an elastic hook according to an embodiment of the present disclosure.
FIG. 8 is a mounting-and-usage schematic view of an elastic hook according to an embodiment of the present disclosure.

### DETAILED DESCRIPTION

### Embodiments of the present disclosure

The present disclosure is further described below in conjunction with the accompanying drawings.

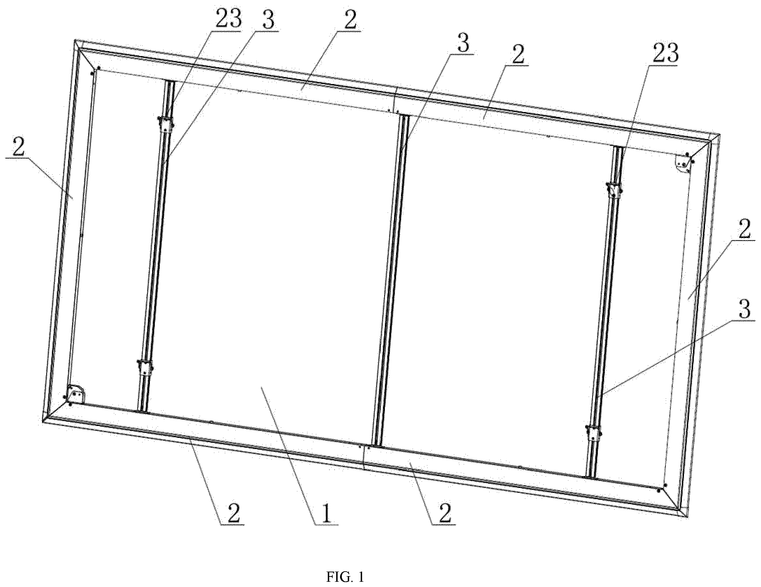

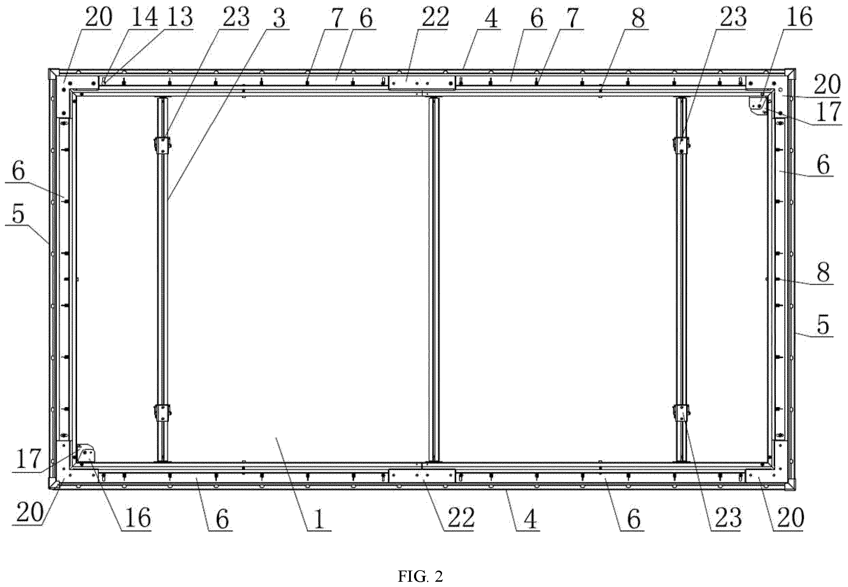

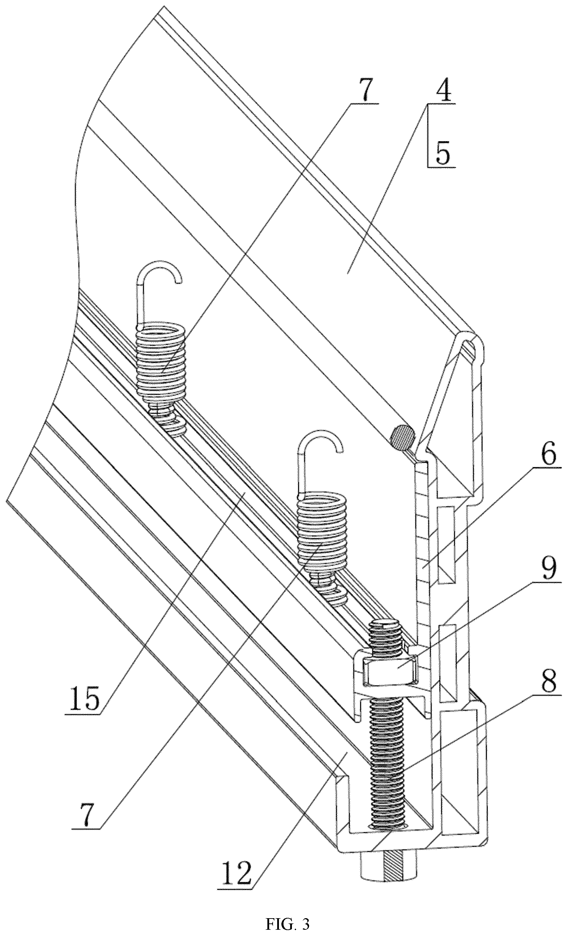

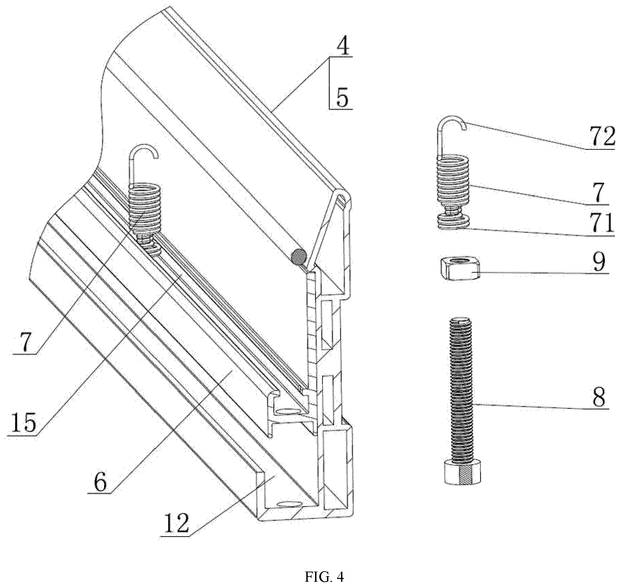

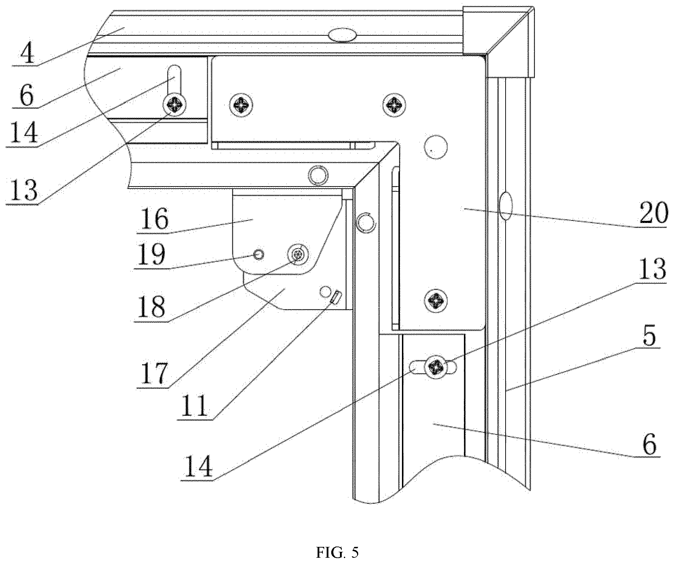

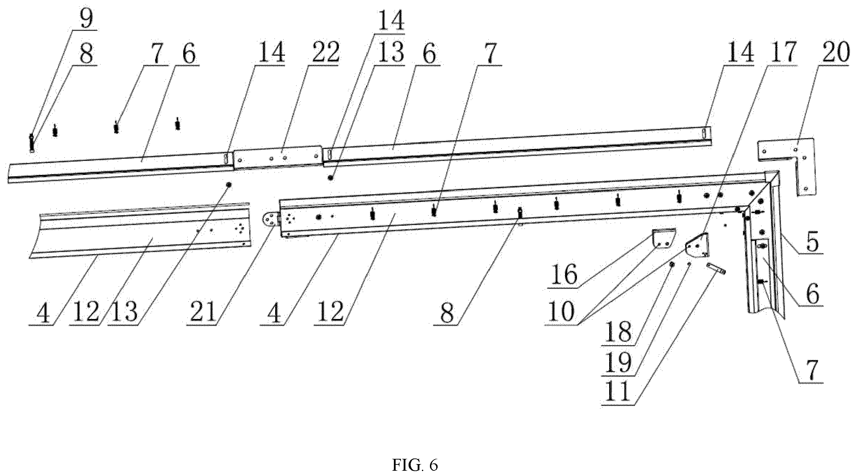

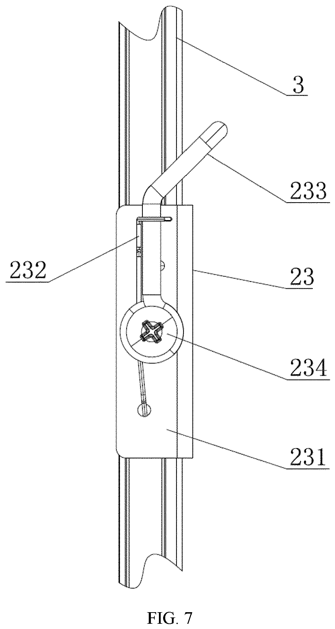

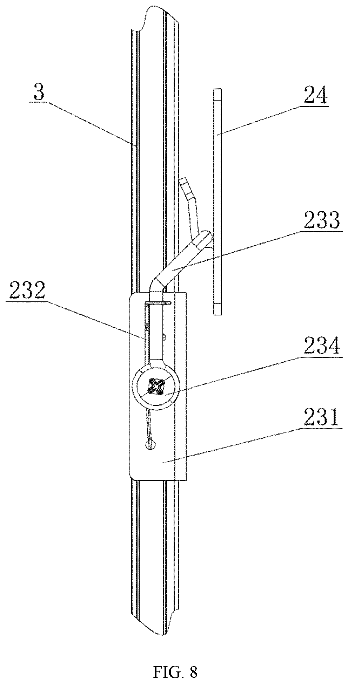

Referring to FIGS. 1 to 8, the present disclosure provides an adjustable folding anti-light curtain mounting mechanism, including a frame assembly and an anti-light curtain 1 adapted to be arranged on the frame assembly; the frame assembly includes an inner-frame combination holder, an outer-frame combination holder 2 configured to be arranged on an outer edge of the inner-frame combination holder, and a connecting rod 3 configured to be connected to an inner side of the inner-frame combination holder. The inner-frame combination holder includes an inner-frame folding cross-frame 4 and an inner-frame longitudinal frame 5 configured to be assembled in sequence to form an inner-frame mounting frame. Each of the inner-frame folding cross-frame 4 and the inner-frame longitudinal frame 5 is arranged with an adjusting combination, an adjusting connecting frame 6, and an adjusting spring 7 for adjusting the tension of the anti-light curtain 1. The adjusting connecting frame 6 is disposed on the inner-frame folding cross-frame 4 and the inner-frame longitudinal frame 5. The adjusting combination includes an adjusting screw 8 and an adjusting nut 9. The adjusting screw 8 is rotatably connected to the inner-frame folding cross-frame 4 and the inner-frame longitudinal frame 5. The adjusting nut 9 is fixed on the adjusting connecting frame 6 and threadedly connected to the adjusting screw 8. An end of the adjusting spring 7 is fastened to the adjusting connecting frame 6, and the other end of the adjusting spring 7 is fastened to a side of the anti-light curtain 1.

In some embodiments, each of the inner-frame folding cross-frame 4 and inner-frame longitudinal frame 5 defines an adjustment slot 12, and the adjustment connecting frame 6 is arranged in the corresponding adjustment slot 12 and slidable inside and outside in the adjustment slot 12. Further, the adjusting connecting frame 6 defines a positioning slot 15, and the adjusting nut 9 is slid into the corresponding positioning slot 15. The end of the adjusting spring 7 is arranged with a catch 71 slid into the positioning slot 15, and the other end of the adjusting spring 7 is arranged with a snap hook 72 for fastening to the side of the anti-light curtain 1. Each of the inner-frame folding cross-frame 4 and the inner-frame longitudinal frame 5 is arranged with a limit post 13 to limit an internal-and-external sliding position of the adjusting connecting frame 6, and the adjusting connecting frame 6 defines a limit slot 14 slidably connected to the limit post 13.

When mounting the anti-light curtain 1, the adjusting nut 9 and the catch 71 of the adjusting spring 7 are slid into the positioning slot 15, and the adjusting screws 8 are arranged on the inner-frame folding cross-frame 4 and the inner-frame longitudinal frame 5 respectively and thread to the corresponding adjusting nuts 9. Moreover, the snap hooks 72 of the springs are fastened to the four sides of the anti-light curtain 1. According to actual applications, the adjusting screw 8 may be rotated to drive the adjusting connecting frame 6 to slide inward or outward to adjust the tension of the anti-light curtain 1, such that the anti-light curtain 1 is vertically and flatly unfolded to enhance the use effect of the anti-light curtain 1.

Furthermore, the inner-frame folding cross-frame 4 and the inner-frame longitudinal frame 5 are arranged with the limit posts 13 for limiting the internal-and-external sliding position of the adjusting connecting frames 6, and the adjusting connecting frames 6 define the limit slots 14 slidably connected to the limit posts 13 to strengthen the stability of the structure and ensure the use effect of the anti-light curtain 1.

Referring to FIGS. 1 to 6, a splicing corner position of the inner-frame folding cross-frame 4 and the inner-frame longitudinal frame 5 is arranged with a corner folding combination frame. A positioning part of the corner folding combination frame is fixed to the inner-frame folding cross-frame 4, and a movable part of the corner folding combination frame is fixed to the inner-frame longitudinal frame 5. The positioning part of the corner folding combination frame defines a locking hole 10, and the movable part of the corner folding combination frame is arranged with an elastic buckle 11. A positioning end of the elastic buckle 11 is fixed to the corner folding combination frame, and folding and unfolding of the inner-frame longitudinal frame 5 relative to the inner-frame folding cross-frame 4 drive the elastic buckle 11 to be fastened in the locking hole 10 or separated from the locking hole 10.

In some embodiments, the corner folding combination frame includes a corner positioning frame 16, a corner movable frame 17, and the elastic buckle 11. The corner positioning frame 16 is fixed to the inner-frame folding cross-frame 4, and the corner movable frame 17 is fixed to inner-frame longitudinal frame 5. The corner positioning frame 16 is arranged with a connecting shaft 18 for rotating connection with the corner movable frame 17. An end of the elastic buckle 11 is fixedly arranged on the corner movable frame 17, and the other end of the elastic buckle 11 is arranged with an elastic pin 19 adapted to be fitted or separated with the locking hole 10.

When mounting, the inner-frame folding cross-frame 4 and the inner-frame longitudinal frame 5 are rotated outward respectively, driving the corner positioning frame 16 and the corner movable frame 17 to rotate around the connecting axis 18 respectively, thereby prompting the elastic pin 19 of the elastic buckle 11 to rotate toward the locking hole 10. When moving to a designated position, the elastic pin 19 is snapped on the locking hole 10 under the elastic action, thereby keeping the inner-frame folding cross-frame 4 and inner-frame longitudinal frame 5 in an unfolded state, which is easy to operate, greatly reduces the mounting time on site, strengthens the supporting strength for use, and improves structural stability.

Further, the splicing corner position of the inner-frame folding cross-frame 4 and the inner-frame longitudinal frame 5 is fixed with a strengthening corner frame 20. A front side and a rear side of a folding position of the inner-frame folding cross-frame 4 are respectively arranged with a hidden hinge 21 and a strengthening connecting plate 22.

Under the role of strengthening corner frame 20 and the strengthening connecting plate 22, the stability between the frame assembly may be strengthened to ensure the normal mounting and application of the curtain.

When closing, the elastic pin 19 may be simply pressed to disengage the elastic pin 19 from the locking hole 10, thereby folding the inner-frame folding cross-frame 4 and the inner-frame longitudinal frame 5 inward respectively. Moreover, the inner-frame folding cross-frame 4 may be further folded by the hidden hinge 21 to realize the inner-frame folding cross-frame 4 and the inner-frame longitudinal frame 5 folded, which is easy to operate and convenient to store.

Referring to FIGS. 1 to 8, the connecting rod 3 is arranged with at least one elastic hook 23, which is slid on the connecting rod 3. Each elastic hook 23 is assembled with a hanging lug 24 configured to be fixed to the wall. Each elastic hook 23 includes a mounting plate 231, a torsion spring 232, a hook 233, and a locking screw 234. The mounting plate 231 is slidably connected to the connecting rod 3, the locking screw 234 is connected to left and right sides of the mounting plate 231 and fixes ends of the hook 233 to the left and right sides respectively, and the middle of the hook 233 can swing up and down with its two ends as fixed points. The torsion spring 232 is arranged between the locking screw 234 and the hook 233, an end of the torsion spring 232 is fastened to the mounting plate 231, and the other end of the torsion spring 232 is arranged in the middle of the hook 233.

When assembling, the hanging lug 24 is mounted on the wall or other positions, and the elastic hook 23 is slid on the designated position of the connecting rod 3 corresponding to the hanging lug 24. The locking screw 234 on both sides is rotated to fix the elastic hook 23 on the connecting rod 3, and the elastic hook 23 is arranged on the hanging lug 24 to make the anti-light curtain 1 mounted on the wall or other designated position, which is easy to mount with stable structure, and can adapt to changes in the mounting positions as required, thereby reducing application limitations.

The above specific embodiments are only a specific way to implement the present disclosure with better effect. Any structure that is the same or equivalent to the adjustable folding anti-light curtain mounting mechanism of the present disclosure is within the scope of the present disclosure.

## Claims

1. An adjustable folding anti-light curtain mounting mechanism, comprising a frame assembly and an anti-light curtain (1) adapted to be arranged on the frame assembly; wherein the frame assembly comprises an inner-frame combination holder, an outer-frame combination holder (2) configured to be arranged on an outer edge of the inner-frame combination holder, and a connecting rod (3) configured to be connected to an inner side of the inner-frame combination holder; **characterized in that** the inner-frame combination holder comprises an inner-frame folding cross-frame (4) and an inner-frame longitudinal frame (5), that are configured to be assembled in sequence to form an inner-frame mounting frame; each of the inner-frame folding cross-frame (4) and the inner-frame longitudinal frame (5) is arranged with an adjusting combination, an adjusting connecting frame (6), and an adjusting spring (7), for adjusting a tension of the anti-light curtain (1); the adjusting connecting frame (6) of the inner-frame folding cross-frame (4) is disposed on the inner-frame folding cross-frame (4), and the adjusting connecting frame (6) of the inner-frame longitudinal frame (5) is disposed on the inner-frame longitudinal frame (5); the adjusting combination comprises an adjusting screw (8) and an adjusting nut (9); the adjusting screw (8) of the inner-frame folding cross-frame (4) is rotatably connected to the inner-frame folding cross-frame (4), and the adjusting screw (8) of the inner-frame longitudinal frame (5) is rotatably connected to the inner-frame longitudinal frame (5); the adjusting nut (9) is fixed on the adjusting connecting frame (6) and threadedly connected to the adjusting screw (8); an end of the adjusting spring (7) is fastened to the adjusting connecting frame (6), and the other end of the adjusting spring (7) is fastened to a side of the anti-light curtain (1);
a splicing corner position of the inner-frame folding cross-frame (4) and the inner-frame longitudinal frame (5) is arranged with a corner folding combination frame; a positioning part of the corner folding combination frame is fixed to the inner-frame folding cross-frame (4), and a movable part of the corner folding combination frame is fixed to the inner-frame longitudinal frame (5); the positioning part of the corner folding combination frame defines a locking hole (10), and the movable part of the corner folding combination frame is arranged with an elastic buckle (11); a positioning end of the elastic buckle (11) is fixed to the corner folding combination frame, and folding and unfolding of the inner-frame longitudinal frame (5) relative to the inner-frame folding cross-frame (4) drive the elastic buckle (11) to be fastened in the locking hole (10) or separated from the locking hole (10).

2. The adjustable folding anti-light curtain mounting mechanism according to claim 1, wherein each of the inner-frame folding cross-frame (4) and inner-frame longitudinal frame (5) defines an adjustment slot (12), and the adjustment connecting frame (6) is arranged in the adjustment slot (12) and slidable inside and outside in the adjustment slot (12).

3. The adjustable folding anti-light curtain mounting mechanism according to claim 2, wherein each of the inner-frame folding cross-frame (4) and the inner-frame longitudinal frame (5) is arranged with a limit post (13) configured to limit an internal-and-external sliding position of the adjusting connecting frame (6), and the adjusting connecting frame (6) defines a limit slot (14) slidably connected to the limit post (13).

4. The adjustable folding anti-light curtain mounting mechanism according to any one of claims 1-3, wherein the adjusting connecting frame (6) defines a positioning slot (15), and the adjusting nut (9) is slidably arranged in the positioning slot (15); the end of the adjusting spring (7) is arranged with a catch (71) slidably arranged in the positioning slot (15), and the other end of the adjusting spring (7) is arranged with a snap hook (72) configured to be fastened to the side of the anti-light curtain (1).

5. The adjustable folding anti-light curtain mounting mechanism according to claim 1, wherein the corner folding combination frame comprises a corner positioning frame (16), a corner movable frame (17), and the elastic buckle (11); the corner positioning frame (16) is fixed to the inner-frame folding cross-frame (4), and the corner movable frame (17) is fixed to inner-frame longitudinal frame (5); the corner positioning frame (16) is arranged with a connecting shaft (18) for rotating connection with the corner movable frame (17); an end of the elastic buckle (11) is fixedly arranged on the corner movable frame (17), and the other end of the elastic buckle (11) is arranged with an elastic pin (19) adapted to be fitted or separated with the locking hole (10).

6. The adjustable folding anti-light curtain mounting mechanism according to any one of claims 1-3, wherein the splicing corner position of the inner-frame folding cross-frame (4) and the inner-frame longitudinal frame (5) is fixed with a strengthening corner frame (20).

7. The adjustable folding anti-light curtain mounting mechanism according to any one of claims 1-3, wherein a front side and a rear side of a folding position of the inner-frame folding cross-frame (4) are respectively arranged with a hidden hinge (21) and a strengthening connecting plate (22).

8. The adjustable folding anti-light curtain mounting mechanism according to any one of claims 1-3, wherein the connecting rod (3) is arranged with at least one elastic hook (23) slidably arranged on the connecting rod (3); each elastic hook (23) is assembled with a hanging lug (24) configured to be fixed to a wall.

9. The adjustable folding anti-light curtain mounting mechanism according to claim 8, wherein each elastic hook (23) comprises a mounting plate (231), a torsion spring (232), a hook (233), and a locking screw (234); the mounting plate (231) is slidably connected to the connecting rod (3), the locking screw (234) is connected to left and right sides of the mounting plate (231) and fixes ends of the hook (233) to the left and right sides respectively, and the middle of the hook (233) is swingable up and down with the ends as fixed points; the torsion spring (232) is arranged between the locking screw (234) and the hook (233), an end of the torsion spring (232) is fastened to the mounting plate (231), and the other end of the torsion spring (232) is arranged in the middle of the hook (233).
